# EUROPÄISCHE PATENTSCHRIFT

(11) **EP 1 697 101 B1**
(45) Veröffentlichungstag und Bekanntmachung des Hinweises auf die Patenterteilung: **28.07.2010**
(21) Anmeldenummer: 04820356.6
(22) Anmeldetag: 19.11.2004
(51) Int. Cl.: B29B 17/00, B65B 31/00, B30B 9/32, B65B 21/18, B67B 7/18

(54) **VORRICHTUNG ZUM REGENERIEREN VON ELASTISCHEN BEHÄLTERN**
DEVICE FOR REGENERATING ELASTIC CONTAINERS
DISPOSITIF DE REGENERATION DE CONTENANTS ELASTIQUES

(30) Priorität: 28.11.2003 DE 10356333
(43) Veröffentlichungstag der Anmeldung: 06.09.2006
(73) Patentinhaber: Krones AG, 93073 Neutraubling (DE)
(72) Erfinder: LINDENKAMP, Benno, 83026 Rosenheim (DE)
(74) Vertreter: Grünecker, Kinkeldey, Stockmair & Schwanhäusser Anwaltssozietät
(86) Internationale Anmeldenummer: PCT/EP2004/013140
(87) Internationale Veröffentlichungsnummer: WO 2005/061194

(56) Entgegenhaltungen:
- WO-A-98/17416
- DE-A1- 19 708 976
- DE-C1- 10 056 520
- DE-U1- 29 922 623
- FR-A- 2 691 648
- FR-A- 2 822 750
- PATENT ABSTRACTS OF JAPAN Bd. 1996, Nr. 08, 30. August 1996 (1996-08-30) & JP 08 107859 A (YANAI WATARU), 30. April 1996 (1996-04-30)
- PATENT ABSTRACTS OF JAPAN Bd. 2002, Nr. 02, 2. April 2002 (2002-04-02) & JP 2001 269799 A (MATSUSHITA SEIKO CO LTD), 2. Oktober 2001 (2001-10-02)

## Beschreibung

Die Erfindung betrifft eine Vorrichtung zum Regenerieren von elastischen Behältern, insbesondere Kunststoffflaschen, gemäß dem Oberbegriff des Anspruchs 1.

Eine Vorrichtung dieser art ist beispielsweise aus der DE-U-299 22 623 bekannt.

Bei Kunststoffmehrwegflaschen für Getränke besteht das Problem, dass die zum Abfüllbetrieb zurückkehrenden und erneut zu befüllenden Flaschen häufig eine Verformung aufweisen. Insbesondere bei einem Temperaturabfall während des Rücktransports und/oder der Lagerung der leeren Behälter verkleinert sich das Volumen des gasförmigen Behälterinhalts. Der ehemals kreisrunde Querschnitt einer Flasche wird verformt (oval, annähernd drei- oder viereckig) oder die Mantelfläche der Flasche bekommt nach innen gewölbte Beulen, wenn in Folge eines auf der Flaschenmündung sitzenden Verschlusses ein Gasaustausch zwischen dem Flascheninnenraum und der Umgebung ausgeschlossen ist. Einer Ovalisierung des Flaschenquerschnitts folgt häufig eine Krümmung des Flaschenbodens. Die Krümmungsachse ist dabei parallel zur kleinen Achse des ovalen Querschnitts.

Die beschriebenen Verformungen verhindern eine problemlose Handhabung dieser Flaschen auf den Transporteinrichtungen bekannter Füllanlagen oder in flaschenaufnehmenden Transportkästen. Auf den bekannten Transporteinrichtungen kann es zu Verklemmungen zwischen den seitlichen Führungen oder zum Umfallen der Flaschen kommen, weil der Flaschenboden nicht mehr planparallel zur Oberfläche der Transporteinrichtung verläuft. Im Flaschenkasten können deformierte Flaschen festklemmen und nicht mehr leicht entnommen werden, so dass Störungen in der Auspackmaschine der Fülllinie auftreten. Zur Lösung dieser bekannten Probleme sind aus dem Stand der Technik unterschiedliche Vorrichtungen bekannt geworden.

Das deutsche Gebrauchsmuster DE 299 22 623 U1 beschreibt eine Möglichkeit, durch den Behälterverschluss hindurch ein Medium in einen Kunststoffbehälter einzuleiten und den Innendruck dabei zu erhöhen. In einer eigens dafür vorgesehenen Vorrichtung wird der Kunststoffverschluss einer Flasche mit einer Kanüle (Hohlnadel) durchstochen. Am vorderen Kanülenende tritt ein flüssiges oder gasförmiges Medium in den Behälterinnenraum ein und kann diesen unter Druck setzen. Der Kanülenmantel dichtet dabei gegen den beim Einstechen entstandenen Lochrand im Behälterverschluss ab. Zur Vorrichtung gehören ferner eine Leergutkontrolle und eine Sortierung. Die Vorrichtung befindet sich in einer Förderstrecke außerhalb eines Packers, d. h. sie ist kein Bestandteil einer Vorrichtung zur Entnahme von Flaschen aus Transportkästen.

Das deutsche Patent DE 100 56 520 C1 offenbart ebenfalls eine Vorrichtung, bei der mit Hilfe einer Kanüle Luft oder Wasser durch einen Verschluss hindurch in einen Behälter eingebracht werden kann. Diese Vorrichtung ist als integraler Bestandteil eines Packkopfes einer Auspackmaschine ausgeführt.

Den bekannten Vorrichtungen haftet der Nachteil an, dass bei Behältern ohne einen Verschluss oder nur lose aufsitzendem Verschluss kein nennenswerter Innendruckaufbau möglich ist. Dies ist insofern problematisch, weil das in eine Abfüllanlage zurückkehrende Leergut nicht nur aus verschlossenen Behältern besteht. Der nicht auszuschließende Anteil an offenen oder fehlenden Behältern im Leergutkasten verursacht demzufolge einen erhöhten Druckluftverbrauch beim Passieren einer Vorrichtung zum Regenerieren deformierter Flaschen. Ein erhöhter Druckluftverbrauch reduziert den erreichbaren maximalen Fülldruck für die Behälter mit Verschluss oder zur Vermeidung dieses Problems entsteht ein nicht unerheblicher Mehraufwand um mit Hilfe steuerungstechnischer Maßnahmen die Zuleitungen zu unverschlossenen Behältern selektiv zu sperren. Ferner können Schallschutzeinrichtungen erforderlich sein, um den durch das ungehinderte Einblasen von Druckluft in offene Behälter entstehenden Lärmpegel in der Abfüllanlage zu begrenzen.

Der Erfindung liegt demzufolge die Aufgabe zu Grunde, eine Vorrichtung zum Regenerieren von elastischen Behältern anzugeben, die nicht mit den vorhergehend genannten Nachteilen behaftet ist.

Gelöst wird diese Aufgabe durch die kennzeichnenden Merkmale des Anspruchs 1.

Vorteilhafte Weiterbildungen der Erfindung sind Gegenstand der abhängigen Ansprüche.

Im Gegensatz zum bekannten Stand der Technik wird der Innenraum aller Behälter während des Regeneriervorgangs zur Umgebungsatmosphäre gasdicht abgeschlossen gehalten und zwar unabhängig davon, ob ein Verschluss vorhanden ist oder nicht. Daraus ergibt sich der Vorteil, dass alle Behälter einen annähernd gleich hohen Innendruck erreichen, wodurch sogar unverschlossene Flaschen mit Deformationen zuverlässig wieder ihre ursprüngliche Gestalt erreichen. Ferner wird bei offenen Flaschen ein Abblasen der Druckluft ins Freie vermieden. Damit ist günstiger Weise eine Lärmbegrenzung sichergestellt. Ein positiver Nebeneffekt ist ferner der reduzierte Druckluftverbrauch, der eine Energieeinsparung bewirkt.

Vorteilhaft ist eine Weiterbildung, bei der eine bevorzugt selbsttätige Steuerung der Druckluft in Abhängigkeit der Anwesenheit einer Flasche erfolgt. Bei fehlenden Flaschen im Leergutkasten unterbleibt eine Druckluftabgabe an den entsprechend zugeordneten Stellen.

Als Stechwerkzeug ist ein Dorn, der massiv ausgebildet, vorgesehen. Dieser massive Dorn ist stabiler und weniger störungsanfällig. Durch eine taillierte oder mit Längsnuten versehene Formgebung der Mantelfläche des Dorns kann in einem Verschluss ein Durchbruch freigelegt und Platz für eine Fluideinleitung geschaffen werden. Im Gegensatz zu einer Kanüle besteht somit nicht die Gefahr von Spänebildung oder einer Verstopfung eines in Durchstoßrichtung offenen Hohlkanals durch Verschlussmaterial. Die Dornspitze dringt dabei tief in den Behälter ein und bleibt stehen, sobald der taillierte oder genutete Bereich des Dornschafts im Bereich des Verschlusses angekommen ist. Zwischen dem Dornschaft und der Lochwand im Verschluss befindet sich ein Ringspalt, durch den ein Fluid in den Behälter gedrückt werden kann. Nach dem Füllen des Behälters kann der Dorn problemlos wieder aus dem Loch im Verschluss herausgezogen werden. Der Dorn kann auch vor dem Füllen aus dem Loch gezogen werden, um den gesamten Lochquerschnitt beim Füllen zu nutzen.

An Stelle eines rotationssymmetrischen Dornes kann ein ovaler, dreikantiger oder sternförmiger Dornquerschnitt gewählt werden, der nach dem Durchstechen des Verschlusses die Übertragung eines Drehmoments auf den Verschluss zum Abschrauben desselben erlaubt. Bei geeigneter Ausformung des Dornes und Ausnutzung der Elastizität des Verschlussmaterials bleibt der Verschluss auf dem Dorn hängen bis er gezielt abgestreift wird.

Auch thermische Einflussnahme kann die Lochbildung herbeiführen oder unterstützen. Ein beheizter Dorn kann sich leichter in ein thermoplastisches Verschlussmaterial eindrücken.

Nachfolgend werden bevorzugte Ausführungsbeispiele anhand der Figuren beschrieben. Es zeigt:
- Fig. 1: eine Seitenansicht mit einem vertikalen Teilschnitt einer Vorrichtung zum Regenerieren von elastischen Kunststoffflaschen gemäß einem ersten Ausführungsbeispiel,
- Fig. 2: eine Vorrichtung gemäß einem zweiten Ausführungsbeispiel,
- Fig. 3: eine Vorrichtung gemäß einem dritten Ausführungsbeispiel,
- Fig. 4: die Vorrichtung gemäß Fig. 1 in Anwendung bei einer verschlossenen Flasche,
- Fig. 5: eine Vorrichtung gemäß Fig. 2 welche Ventilfunktionen enthält und
- Fig. 6: eine Vorrichtung gemäß Fig. 3 mit einem taillierten Dorn anstatt einer Kanüle.

Allen Ausführungsbeispielen gemeinsam ist ein koaxial zur Mittelachse der Flaschenmündung einer elastischen Kunststoffflasche 5 ein- und ausfahrbares Stechwerkzeug 6, 7 zum Einleiten eines Fluids, vorzugsweise Druckluft. Wie beim bekannten Stand der Technik erfolgt die Betätigung des Stechwerkzeugs 6, 7 in an sich bekannter Weise durch nicht dargestellte steuerbare Stellorgane, z.B. Pneumatikzylinder oder dgl.

Zum Durchstoßen von einen Verschluss 2 aufweisenden Flaschen 5 ist das zur Flasche weisende Ende des Stechwerkzeugs angespitzt bzw. mit einem schrägen Anschnitt versehen.

An jedem Stechwerkzeug ist entweder ein Dichtkörper 1a, 1b, 1c oder 1d aus einem geeigneten Dichtwerkstoff, z.B. Hartgummi unverrückbar gasdicht befestigt. Zwischen dem Dichtkörper und dem Stechwerkzeug kann wenigstens ein Dichtring vorgesehen sein. Der Dichtkörper ist so gestaltet, dass er bei einem fehlenden Flaschenverschluss mit einer Flasche 5 zum gasdichten Abschließen des Flascheninnenraums gegenüber der Atmosphäre in Eingriff bringbar ist. Die Abdichtung kann in Verbindung mit dem oberen Mündungsrand 3 einer offenen Flasche 5 erfolgen oder im Zusammenwirken mit dem axial unterhalb der Flaschenmündung 3 radial abstehend angeformten Halskragen 4 von Kunststoffflaschen.

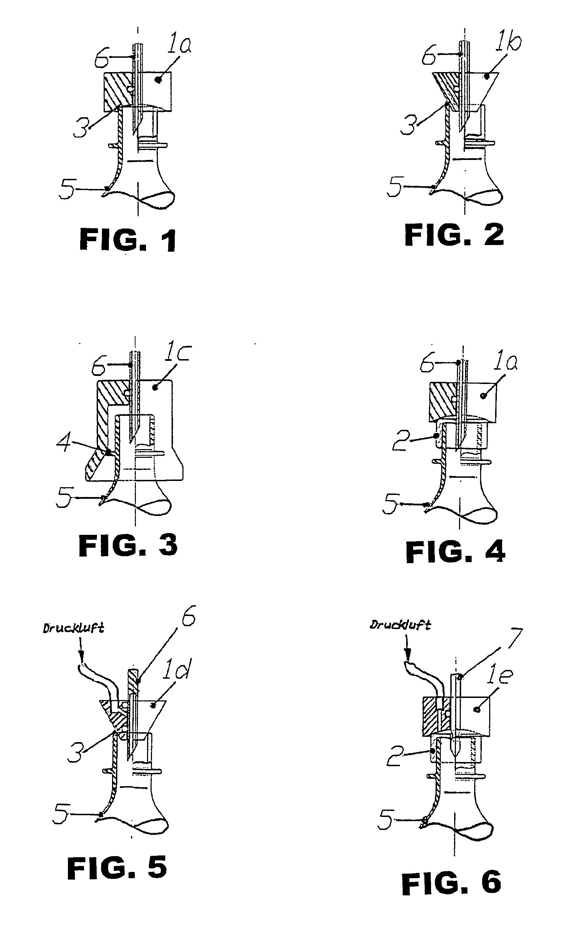

Bei der in Fig. 1 erkennbaren Ausführung weist der Dichtkörper 1a an seiner Unterseite, d.h. an der zur Flaschenmündung weisenden Seite eine konkav gewölbte Dichtfläche auf, die von dem Stechwerkzeug axial durchgriffen wird, wobei das Ende des Stechwerkzeugs diese Fläche in axialer Richtung zum Eintauchen in eine Flaschenmündung überragt.

Bei einem Vergleich der Fig. 1 und 4 ist ersichtlich, dass im Falle eines fehlenden Verschlusses 2 die konkave Dichtfläche am Flaschenmündungsrand 3 abdichtend anliegt, während bei Vorhandensein eines Verschlusses 2 die gleiche Dichtfläche am oberen Verschlussrand anliegt, wenn des Stechwerkzeug die Verschlussoberseite durchstoßen hat.

Beim Ausführungsbeispiel nach Fig. 2 besitzt der Dichtkörper 1b die Form eines geraden Kegelstumpfes, der an der zur Flaschenmündung weisenden Seite eine zur Mündungsebene planparallele Stirnfläche aufweist, die beim Vorhandensein eines Verschlusses an dessen Oberseite anliegt. Wenn jedoch eine offene Flasche 5 mit diesem Dichtkörper 1b in Eingriff gelangt, taucht dessen kegelige bzw. konische oder ggf. konvexe Mantelfläche teilweise durch die Mündungsebene axial in den Flaschenhals ein, wobei dann der obere Mündungsrand der Flasche 5 an seiner inneren Umfangsfläche gasdicht verschlossen ist.

Beim Ausführungsbeispiel nach Fig. 3 besitzt der Dichtkörper 1c eine hauben- oder glockenförmige Kontur, die den Kopfbereich einer Flasche vollumfänglich mit radialem Zwischenabstand umgibt und eine Abdichtung am Halskragen 4 einer Flasche 5 herbeiführt. Der Innendurchmesser des Dichtkörpers 1c ist größer als der Außendurchmesser eines Verschlusses 2 bemessen.

Bei der Ausführung nach Fig. 5 ist im Falle von fehlenden Flaschen in einem Flaschenkasten eine Einzelabschaltung der Druckluftzuführung zu den einzelnen Stechwerkzeugen vorgesehen. Die Vorrichtung enthält einen Dichtkörper 1d mit einem schräg zum Stechwerkzeug verlaufenden Kanal. Ober- und unterhalb des Kanalaustritts sind axial beabstandete Dichtringe zwischen dem Stechwerkzeug und dem Dichtkörper 1d angeordnet. Bei diesem Ausführungsbeispiel ist der Dichtkörper auf dem Stechwerkzeug axial verschiebbar gelagert. Wenn der Dichtkörper 1d bei einer gesteuerten Absenkbewegung auf eine Flasche 5 oder deren Verschluss trifft und dabei entlang des Stechwerkzeuges gegen den Widerstand einer nicht dargestellten Rückstellfeder nach oben verschoben wird, entsteht eine leitende Verbindung zwischen einer äußeren Druckluftzuleitung und dem Flascheninnenraum. Wird der Dichtkörper 1d bei fehlenden Flaschen nicht durch eine Dichtkraft verschoben, bleibt die Fluidzufuhr unterbrochen.

Die Ausführung nach Fig. 6 zeigt einen taillierten Dorn 7. Die Druckluftzuführung erfolgt in einen zur Atmosphäre abgedichteten Bereich zwischen einem Dichtkörper le und der Flasche 5 bzw. deren Verschluss 2. Der Dorn 7 kann zur Unterstützung der Durchstoßwirkung bei thermoplastischen Verschlüssen beheizbar ausgebildet sein.

Besonders vorteilhaft ist eine Integration der beschriebenen Vorrichtungen in die Greiforgane eines Auspackkopfes. Eine Verwendung der Regeneriervorrichtung ist aber auch in Verbindung mit einem Verschlussabschrauber, einer Vorrichtung mit Leergutkontrolle oder in einer Vorrichtung mit Sortier- oder Ausschleusmöglichkeit in einer Förderstrecke vor oder nach einem Packer möglich.

## Patentansprüche

1. Vorrichtung zum Regenerieren von elastischen Behältern (5), insbesondere Kunststoffflaschen, für eine spätere Wiederbefüllung mit wenigstens einem Stechwerkzeug (6,7) zum Durchstoßen eines Behälterverschlusses (2) und Mitteln zum Einleiten eines Fluids in den Innenraum eines Behälters,
**dadurch gekennzeichnet,**
**dass** die Vorrichtung eine Einrichtung (Ia bis Ie) zum Abdichten des Behälterinnenraumes gegenüber der Umgebungsatmosphäre aufweist; und
**dass** das Stechwerkzeug ein massiver Dorn (7) ist.

2. Vorrichtung nach Anspruch 1, **dadurch gekennzeichnet, dass** die Einrichtung einen Dichtkörper (Ia bis Ie) aufweist, der den Mündungs- und/oder Kopfbereich eines Behälters (5) hermetisch abdichtet, bevor das Fluid in den Behälterinnenraum eingeleitet wird.

3. Vorrichtung nach Anspruch 2, **dadurch gekennzeichnet, dass** der Dichtkörper (Ia, Ib, Id, Ie) so ausgebildet ist, dass er mit dem Mündungsrand eines unverschlossenen Behälters (5) abdichtend in Anlage bringbar ist.

4. Vorrichtung nach Anspruch 2 oder 3, **dadurch gekennzeichnet, dass** der Dichtkörper (Ia, Ie) an seiner zum Behälter (5) weisenden Seite eine konkave Oberfläche aufweist.

5. Vorrichtung nach Anspruch 2 oder 3, **dadurch gekennzeichnet, dass** der Dichtkörper (Ib, Id) als Kegelstumpf mit einer zur Mündungsebene eines Behälters (5) parallelen Stirnfläche ausgebildet ist.

6. Vorrichtung nach Anspruch 1 oder 2, **dadurch gekennzeichnet, dass** der Dichtkörper (1c) so ausgebildet ist, dass er mit einer Schulterfläche oder einem unterhalb der Mündung radial nach außen abstehenden Halsring (4) eines Behälters (5) abdichtend in Anlage bringbar ist.

7. Vorrichtung nach Anspruch 6, **dadurch gekennzeichnet, dass** der Dichtkörper (tic) hauben- oder glockenartig ausgebildet ist und den Kopfbereich eines Behälters (5) vollumfänglich abdichtet, wenn der mit einem Behälter in Anlage gebracht wird.

8. Vorrichtung nach wenigstens einem der Ansprüche 2 bis 7, **dadurch gekennzeichnet, dass** die Abdichtung des Behälterinnenraumes durch eine Relativbewegung zwischen Behälter (5) und Dichtkörper (Ia bis Ie) längs zur Behälterachse erfolgt.

9. Vorrichtung nach wenigstens einem der Ansprüche 2 bis 8, **dadurch gekennzeichnet, dass** das Stechwerkzeug (6,7) durch eine steuerbare Betätigungseinrichtung längs zur Behälterachse relativ bewegbar und der Dichtkörper (Ia bis Ie) mit dem Stechwerkzeug (6,7) bewegungsverbunden ist.

10. Vorrichtung nach Anspruch 9, **dadurch gekennzeichnet, dass** der Dichtkörper (Ia bis Ie) vom Stechwerkzeug (6,7) koaxial durchgriffen wird und gegenüber diesem abgedichtet ist.

11. Vorrichtung nach wenigstens einen der Ansprüche 1 - 10, **dadurch gekennzeichnet, dass** der vorzugsweise zylindrische Dorn (7) eine Mantelfläche mit vollumfänglicher Taillierung und/oder Nuten aufweist.

12. Vorrichtung nach wenigstens einem der vorhergehenden Ansprüche 2 bis 11, **dadurch gekennzeichnet, dass** der Dichtkörper (Id) eine Fluidleitung verschließt, wenn er nicht mit einer Behälteröffnung oder -verschluss in Berührung kommt, und die Fluideinleitung in einen Behälter freigibt, wenn er mit einer Behälteröffnung oder - verschluss in Berührung kommt.

13. Vorrichtung nach wenigstens einem der vorhergehenden Ansprüche 1 bis 12, **dadurch gekennzeichnet, dass** die Lochbildung in einem Verschluss (2) durch thermische Einwirkung, insbesondere Beheizung des Stechwerkzeugs (6,7), herbeigeführt oder unterstützt wird.

14. Vorrichtung nach wenigstens einem der vorhergehenden Ansprüche 1 bis 13, **dadurch gekennzeichnet, dass** der Dorn (7) einen nicht rotationssymmetrischen Querschnitt aufweist und vorzugsweise Bestandteil einer Verschlussabschraubeinrichtung ist.

15. Vorrichtung nach wenigstens einem der vorhergehenden Ansprüche 1 bis 14, **dadurch gekennzeichnet, dass** die Vorrichtung Bestandteil einer Packtulpe zum Auspacken von Behältern, insbesondere elastische Kunststoffflaschen ist.

## Claims

1. Device for the regeneration of elastic containers (5), in particular plastic bottles, for later refilling with at least one piercing tool (6, 7) for piercing through a container closure element (2) and means for introducing a fluid into the interior of a container,
**characterised in that**
the device exhibits an element (Ia to Ie) for sealing the interior of the container against the surrounding atmosphere; and
that the piercing tool is a solid pin (7).

2. Device according to Claim 1, **characterised in that** the device element exhibits a sealing body (Ia to Ie), which hermetically seals the mouth and/or head area of a container (5) before the fluid is introduced into the interior of the container.

3. Device according to Claim 2, **characterised in that** the sealing body (Ia, Ib, Id, Ie) is designed in such a way that it can be brought into sealing contact with the mouth edge of an unsealed container (5).

4. Device according to Claim 2 or 3, **characterised in that** the sealing body (Ia, Ie) exhibits a concave surface on its side facing the container (5).

5. Device according to Claim 2 or 3, **characterised in that** the sealing body (Ib, Id) is designed as a truncated cone with a face surface parallel to the mouth plane of a container (5).

6. Device according to Claim 1 or 2, **characterised in that** the sealing body (Ic) is designed in such a way that it can be brought into sealing contact with a shoulder surface or a neck ring (4) of a container (5) projecting radially outwards beneath the mouth.

7. Device according to Claim 6, **characterised in that** the sealing body (tic) is designed in the shape of a hood or bell, and seals the head area of a container (5) over its full circumference when it is brought into contact with a container.

8. Device according to one of Claims 2 to 7, **characterised in that** the sealing of the interior of the container is effected by a relative movement between the container (5) and the sealing body (Ia to Ie) longitudinally to the axis of the container.

9. Device according to at least one of Claims 2 to 8, **characterised in that** the piercing tool (6, 7) can be moved by a controllable actuation device longitudinally relative to the axis of the container and the sealing body (Ia to Ie) can be movement-linked to the piercing tool (6, 7).

10. Device according to Claim 9, **characterised in that** the sealing body (Ia to Ie) is penetrated coaxially by the piercing tool (6, 7) and is sealed against this.

11. Device according to at least one of the foregoing Claims 1-10, **characterised in that** the pin (7), for preference cylindrical, exhibits a sheath surface with full-circumference waist tapering and/or grooves.

12. Device according to at least one of the foregoing Claims 2 to 11, **characterised in that** the sealing body (Id) closes a fluid line when it is not in contact with a container opening or closure element, and the fluid line is cleared into a container when it comes in contact with a container opening or closure element.

13. Device according to at least one of the foregoing Claims 1 to 12, **characterised in that** the hole formation in a closure element (2) is induced or supported by the effect of heat, in particular the heating of the piercing tool (6, 7).

14. Device according to at least one of the foregoing Claims 1 to 13, **characterised in that** the pin (7) exhibits a cross-section which is not rotationally symmetrical and is for preference a constituent part of a closure unscrewing device.

15. Device according to at least one of the foregoing Claims 1 to 14, **characterised in that** the device is a constituent part of a tulip-shaped packing element for the packing out of containers, in particular elastic plastic bottles.

## Revendications

1. Dispositif de régénération de récipients élastiques (5), en particulier de bouteilles en matière plastique, en vue d'un nouveau remplissage ultérieur, avec au moins un outil de perçage (6, 7) pour percer un couvercle de récipient (2), et des moyens pour introduire un fluide dans l'espace intérieur d'un récipient,
**caractérisé en ce que** le dispositif comporte un mécanisme (1a à 1e) pour réaliser l'étanchéité de l'intérieur du récipient par rapport à l'atmosphère ambiante ; et
**en ce que** l'outil de perçage est constitué par un poinçon massif (7).

2. Dispositif selon la revendication 1, **caractérisé en ce que** le mécanisme comporte un corps d'étanchéité (1a à 1e) qui ferme hermétiquement la zone du goulot et/ou du haut d'un récipient (5) avant que le fluide ne soit introduit dans l'espace intérieur du récipient.

3. Dispositif selon la revendication 2, **caractérisé en ce que** le corps d'étanchéité (la, 1b 1d, 1e) est conçu pour pouvoir être appliqué de manière étanche contre le bord du goulot d'un récipient (5) non fermé.

4. Dispositif selon la revendication 2 ou 3, **caractérisé en ce que** le corps d'étanchéité (1a, 1e) présente sur son côté tourné vers le récipient (5) une surface concave.

5. Dispositif selon la revendication 2 ou 3, **caractérisé en ce que** le corps d'étanchéité (1b, 1d) est conçu comme un tronc de cône avec une surface frontale parallèle au plan du goulot d'un récipient (5).

6. Dispositif selon la revendication 1 ou 2, **caractérisé en ce que** le corps d'étanchéité (1c) est conçu pour pouvoir être appliqué de manière étanche contre une surface d'épaulement ou un collet (4) d'un récipient (5) qui fait saillie radialement vers l'extérieur au-dessous du goulot.

7. Dispositif selon la revendication 6, **caractérisé en ce que** le corps d'étanchéité (1c) a la forme d'une calotte ou d'une cloche et rend la zone supérieure d'un récipient (5) étanche sur toute sa circonférence quand il est appliqué contre un récipient.

8. Dispositif selon l'une au moins des revendications 2 à 7, **caractérisé en ce que** l'étanchéité de l'intérieur du récipient est réalisée grâce à un mouvement relatif entre le récipient (5) et le corps d'étanchéité (la à 1e) le long de l'axe du récipient.

9. Dispositif selon l'une au moins des revendications 2 à 8, **caractérisé en ce que** l'outil de perçage (6, 7) est mobile longitudinalement par rapport à l'axe de récipient grâce à un mécanisme d'actionnement apte à être commandé, et le corps d'étanchéité (1a à 1e) est solidaire de l'outil de perçage (6, 7).

10. Dispositif selon la revendication 9, **caractérisé en ce que** le corps d'étanchéité (1a à 1e) est traversé coaxialement par l'outil de perçage (6, 7) et est étanche par rapport à celui-ci.

11. Dispositif selon l'une au moins des revendications 1 à 10, **caractérisé en ce que** le poinçon (7) de préférence cylindrique présente une surface latérale avec une partie resserrée sur toute sa circonférence et/ou des rainures.

12. Dispositif selon l'une au moins des revendications 2 à 11 précédentes, **caractérisé en ce que** le corps d'étanchéité (1d) obture une conduite de fluide quand il ne vient pas en contact avec une ouverture ou un couvercle de récipient, et dégage la conduite de fluide quand il vient en contact avec une ouverture ou un couvercle de récipient.

13. Dispositif selon l'une au moins des revendications 1 à 12 précédentes, **caractérisé en ce que** la formation d'un trou dans un couvercle (2) est provoquée ou favorisée par une action thermique, en particulier par le chauffage de l'outil de perçage (6, 7).

14. Dispositif selon l'une au moins des revendications 1 à 13 précédentes, **caractérisé en ce que** le poinçon (7) présente une coupe transversale sans symétrie de révolution et fait de préférence partie d'un dispositif de dévissage de couvercle.

15. Dispositif selon l'une au moins des revendications 1 à 14 précédentes, **caractérisé en ce qu'**il fait partie d'un équipement pour le déballage de récipients, en particulier de bouteilles élastiques en matière plastique.
